# EUROPÄISCHE PATENTANMELDUNG

(11) **EP 1 666 708 A2**
(43) Veröffentlichungstag der Anmeldung: **07.06.2006**
(21) Anmeldenummer: 05026011.6
(22) Anmeldetag: 29.11.2005
(51) Int. Cl.: F02C 1/04, F02C 3/36

(54) **Verfahren zum Betreiben einer Heissluftmaschine**

(30) Priorität: 30.11.2004 DE 102004057637
(71) Anmelder: Eckert, Reinhard, 91257 Pegnitz-Bronn (DE)
(72) Erfinder: Eckert, Reinhard, 91257 Pegnitz-Bronn (DE)

(57) **Zusammenfassung**

Es wird ein Verfahren zum Betreiben einer Heissluftmaschine und eine Heissluftmaschine zur Ausübung dieses Verfahrens angegeben, wobei in einer strömungstechnischen Reihenschaltung ein Prozessfluidstrom durch einen Verdichter, eine brennstoffbeheizte Wärmequelle mit einem Brennraum sowie eine Entspannungsmaschine geführt wird und Wärmeenergie, die in dem aus der Entspannungsmaschine ausströmenden Prozessfluidstrom enthalten ist, der Wärmequelle zugeführt wird und wobei der in den Verdichter einströmene Prozessfluidstrom Umgebungsluft ist. Um beliebige Wärmequellen verwenden zu können und die Gefahr von Verschmutzungen sowie Korrosion der Entspannungsmaschine zu minimieren sowie bei geringem apparativen Aufwand eine Wärmerückgewinnung zu erzielen, wird der aus der Entspannungsmaschine austretende Prozessfluidstrom zumindest teilweise dem Brennraum der Wärmequelle zugeführt.

Gestartet wird die Anlage mit unterschiedlichen Brennstoffen (Öl. Gas etc), sie kann im Überdruck wie auch im Unterdruck (Saugzug) betrieben werden und zur Emissionsreduzierung werden kalte, geringsauerstoffhaftige Abgase zurückgeführt.

Abhängig davon ob Sekundärtuftvorwärmung benötigt wird oder nicht erfolgt die Bestückung mit Wärmetauschern.

Schwere und grobe Materilien werden mit einer vorgeschalteten Feuerung verrannt und die Anlage ist auch als reine Wärmeerzeugungsanlage erricht- und betreibbar.

## Beschreibung

Die erfindung bezieht sich auf ein Verfahren zum Betreiben einer Heissluftmachine gemäß dem Gattungsbegriff des Anspruchs 1 und eine Heissluftmaschine zur Durchführung des Verfahrens gemäß dem Gattungsbegriff des Anspruchs 2.

Eine bekannte Heissluftmaschine dieser Art (Buch: Die Grundlagen der Technischen Wärmelehre., Puschmann/Drath, Kapitel 10 , Text zu Bild 87b) besteht aus einem Turbinen-Verdichter und einer Turbinen- Entspannungsmaschine, deren Läufer zusammen mit einem elektrischen Generator und einem Anlassermotor auf einer gemeinsamen Welle sitzen. Der Verdichter saugt Umgebungsluft an, die komprimiert durch einen Wärmeübertrager in eine druckfeste Brennkammer einer Wärmeque le strömt, in die flüssiger oder gasförmiger Brennstoff eingespritzt und gezündet wird. Der expandierende Prozessfluidstrom treibt die Turbinen-Entspannungsmaschine an welche ihrerseits den Verdichter und denGenerator antreibt. Der aus der Entspannungsmaschine austretende Prozessfluidstrom wird durch die Primärseite des Wärmeübertragers geleitet, wodurch darin enthaltene Wärmeenergie der dem Brennraum zuströmenden Druckluft des Verdichters aufgegeben und damit der Wärmequelle zugeführt wird.

Der Erfindung liegt die Aufgabe zu Grunde, ein gattungsgemäßes Verfahren sowie eine zugehörige Heissluftmaschine anzugeben, durch welche der Einsatz beliebiger Arten von Wärmequellen ermöglicht, dabei die Gefahr der Verschmutzung und Korrosion insbesondere der Entspannungsmaschine minimiert und bei geringem apparativen Aufwand eine effektive Rückgewinnung von Prozesswärme ermöglicht wird.

Die Lösung dieser Aufgabe erfolgt gemäß der Erfindung durch die kennzeichnenden Merkmale der Ansprüche 1 bzw. 2. Vorteilhafte Weiterbildungen sind in zusätzlichen Ansprüchen angegeben.

Bei einer Verfahrensweise gemäß der Erfindung wird die für den Antrieb der Anlage und ggf. auch des Verdichters und einer Arbeitsmaschine erforderliche Energie mittels eines Prozesswärmetauschers frei von Verbrennungsrückständen aus der Wärmequelle ausgekoppelt und dem Prozessfluidstrom aus komprimierter Luft aufgegeben und dann in der Entspannungsmaschine in Nutzarbeit umgeformt. Mit Asche oder sonstigen korrossiven Bestandteilen wird somit die Entspannungsmaschine nicht beaufschlagt. Der Prozesswärmetauscher kann dabei mit jeder beliebigen Wärmequelle thermisch gekoppelt werden, wobei sich hierfür besondes eine Wirbelkammerfeuerung eignet, in welcher vorzugsweise regenerative Brennstoffe wie Holzschnitzel, Stroh u. dgl. verfeuert werden können. Insbesondere strömt aber der aus der Entspannungsmaschine austretende, in der Regel noch sehr heisse Prozessfluidstrom aus Luft unmittelbar über den primären Zuluftweg in den Brennraum der Wärmequelle, so dass diesbezüglich eine vollständige Wärmerückgewinnung ohne apparativen Aufwand erreicht wird. Solange dabei der Prozessfluidstrom alleine ausreicht, einen stöchiometrischen oder leicht überstöchiometrischen Verbrennungsvorgang mir einer Luftüberschusszahl von etwa 1 bis 2 in der Brennkammer aufrecht zu erhalten, wird keine zusätzliche E1-04
Verbrennungsluft in den Zuluftweg eingebracht. Gelangt dagegen der Brennvorgang in den unterstöchiometrischen Zustand mit einer Luftüberschusszahl unter dem Wert 1, dann wird in den Zuluftweg zusätzlich Umgebungsluft z.B. mittels eines Gebläses eingeführt, bis zumindest ein stöchiometrischer Verbrennungsprozess erreicht ist. Wenn dagegen bei alleiniger Zuführung von Luft aus dem Prozessfluidstrom die Luftüberschusszahl den Wert von etwa 2 überschreitet, dann wird ein entsprechender Teil des Prozessfluidstroms nach der Entspannungsmaschine abgezweigt und steht für eine anderweitige Nutzung zur Verfügung.

Um darüber hinaus einen hohen Wirkungsgrad der Anlage zu erzielen, wird zweckmäßig unmittelbar im Flammbereich in der Brennkammer der Wärmequelle ein Hochtemperaturwärmetauscher angeordnet, aus dem der Prozessfluidstrom direkt zur Entspannungsmaschine geleitet wird. Wird zumindest ein weiterer Wärmetauscherin den Abgasweg der Brennkammer gelegt, dann kann derselbe wahlweise dem Prozesswärmetauscher zur Vorerwärmung des vom Verdichter geförderten, noch relativ kalten Prozessfluidstromes stömungsmäßig vorgeschaltet werden oder zur Vorerwärmung der neben dem Prozessfluidstrom ggf. erforderlichen kalten Zuluft aus der Umgebung für den Verbrennungsvorgang in der Brennkammer herangezogen werden. Auf Grund der Verwendung von Luft als Prozessfluidstrom eignet sich für die Entspannungsmaschine vorzugsweise ein Heissgasmotor.

Die Erfindung ist nachfolgend an Hand eines Ausführungsbeispiels näher erläutert.

Eine Heissluftmaschine gemäß der Erfindung besteht in ihren wichtigsten Bauteilen aus einem Verdichter 1, einem Prozesswärmetauscher 2 in einer Wärmequelle 3 und einer Entspannungsmaschine 4. Die Entspannungsmaschine 4 und der Verdichter 1 haben vorliegend eine gemeinsame Antriebswelle 5, mit der zugleich ein elektrischer Generator 6 als Arbeitsmaschine und ein Anlasser 7 gekuppelt ist. Der Verdichter 1 weist einen Lufteinlassstutzen 8 auf, durch den im Betrieb Luft aus der Umgebung angesaugt wird. Die auf z.B. 10 Bar komprimierte und dadurch vorgewärmte Luft verlässt den Verdichter 1 über eine Druckleitung 9 und strömt in den daran angeschlossenen Prozesswärmetauscher 2, aus dem sie bei befeuerter Wärmequelle 3 hoch erhitzt unter entsprechend hoher Vollumenvergrößerung durch eine Zuleitung 10 in die Entspannungsmaschine 4 überströmt. In der Entspannungsmaschine 4 erfolgt ein Druckabbau und damit verbunden auch eine Temperaturverminderung des Prozessfluidstromes unter dementsprechender Verrichtung von Arbeit, so dass über die Welle 5 der Verdichter 1 und der ebenfalls damit gekuppelte Generator 6 oder eine andere Arbeitsmaschine angetrieben werden können.

Ist als Entspannungsmaschine 4 eine Turbine eingesetzt, dann kann ggf. der Anlasser 7 entfallen, wenn das Anfangsdrehmoment der Turbine für den Anlauf des Verdichters 1 ausreicht. Wird als Entspannungsmaschine 4 dagegen ein Heissgasmotor verwendet, dann sorgt der Anlasser 7 für den Anlauf der Anordnung nach einem Stillstand.

Die Wärmequelle 3 kann bei ausreichender Feuerleistung und Temperatur im Brennraum an sich beliebig ausgebildet sein, wobei z.B. eine Öl- , eine Gas- , eine Kohle- oder eine Holzheizung geeignet ist. Bevorzugt kommt vorliegend als Wärmequelle 3 jedoch eine Wirbelkammerfeuerung zum Einsatz, in welcher nach einer Anheizphase z.B. noch feuchtes Holz, Stroh oder andere geeignete Biomasse erfolgreich verfeuert werden kann. Hierbei weist die als Wirbelkammerfeuerung ausgebildete Wärmequelle 3 in einem Außengehäuse 11 einen Brennraum 12 auf, der von einem trichterförmig nach unten abfallenden Brennraumboden 13 mit einer zentralen Feuerungsöffnung 14, einer zylinderförmigen Brennraummantelwand 15 und einer Brennraumdeckenwand 16 umgeben ist. Die Brennraummantelwand 15 ragt von der Brennraumdeckenwand 16 nach unten und endet mit axialem Abstand oberhalb der Brennraumbodenwand 13. Durch den so gebildeten Spalt zwischen der Brennraumbodenwand 13 und der Brennraummantelwand 15 strömen die Feuerungsabgase in einen Abgaskanal 17, weicher die Brennraummantelwand 15 aussen umgibt.

Der als Hochtemperatur-Wärmetauscher ausgebildete Prozesswärmetauscher 2 ist als beidendig offenes Rohr gestaltet, das senkrecht im Brennraum 12 steht und mit Abstand sowohl von der Brennraumbodenwand 13 als auch von der Brennraumdeckenwand 16 endet. Auch radial ist ein Ringraum zwischen dem Prozesswärmetauscher 2 und der Brennraummantelwand 15 vorhanden. Der Prozesswärmetauscher 2 liegt zudem achsengleich mit der Feuerungsöffnung 14, die als Rohrstutzen 20 ihrerseits in einen darunter befindlichen Aschetopf 21 frei und mit radialem Abstand ausmündet. Vom Aschetopf 21 führt ein Betriebskanal 22 seitlich aus dem Gehäuse 11 nach aussen, durch welchen im Betrieb wechselweise Brennstoff zugeführt und Asche abgeführt wird.

Der den Aschetopf 21 aufnehmende Feuerungsluftraum 23 ist Teil des Zuluftweges der Wärmequelle 3 und druckdicht nach aussen abgeschlossen, wobei im eingefahrenen Betriebszustand die von der Entspannungsmaschine 4 abgegebene, mit z.B. 600 Grad Celsius noch relativ heisse Luft über eine Auslassleitung 25 in den Feuerungsluftraum 23 einströmt, wodurch die gesamte Abwärme des Prozessfluidstroms der Wärmequelle 3 wieder zugeführt und damit zurückgewonnen wird. Solange bei ausschliesslicher Zuführung von Luft aus dem Prozessfluidstrom der Verbrennungsprozess stöchiometrisch bis leicht überstöchiometrisch mit einer Luftüberschusszahl zwischen etwa 1 und 2 abläuft, ist ein Eingriff in den Verbrennungsprozess nicht erforderlich. Übersteigt die Luftüberschusszahl jedoch den Wert von etwa 2, dann wird nur noch ein Teil des Prozessfluidstroms dem Verbrennungsprozess zugeführt, während der andere Teil abgezweigt und einer anderweitigen Nutzung wie z.B. der Heizung von Räumen oder anderen Prozessen zugeführt werden kann. Tritt dagegen eine unterstöchiometrische Verbrennung im Brennraum 12 der Wärmequelle 3 auf, dann bläst ein Gebläse 24 die zur Erreichung des zumindest stöchiometrischen Betriebs notwendige Feuerungsluft aus der freien Umgebung in den Feuerungsluftraum 23 ein. Die im Feuerungsluftraum 23 unter Druck stehende Feuerungsluft störnt durch den Spalt zwischen dem Stutzen 20 und dem Aschetopf 21 in den Stutzen 21 ein, wobei im Aschetopf vorhandener Brennstoff mitgerissen und in den bereits aufgeheizten befeuerten Brennraum 12 eingetragen sowie dort verbrannt wird. Die dabei entstehende Flammfront ist unmittelbar in den Prozesswärmetauscher 2 gerichtet, so dass der Feuerungsgasstrom innen durch den Prozesswärmetauscher nach oben sowie nach einer Umlenkung an dessen Aussenseite nach unten und dort teilweise wieder in den Innenraum zur nochmaligen Vermischung mit Brennluft und zur weiteren Verbrennung in einem Kreislauf einströmt. Der Prozesswärmetauscher 2 wird dadurch mit der maximalen Brennraumtemperatur beaufschlagt und heizt den Prozessfluidstrom auf Temperaturen von z. B. 860 Grad Celsius auf. Der Prozesswärmetauscher 2 wird demnach auch an seiner Aussenseite von den heissen Brenngasen umströmt, so dass ein optimaler Wärmeenergieübergang auf den Prozessfluidstrom und damit ein hoher Wirkungsgrad der Heissluftmaschine insgesamt erreicht wird, die nur mit brenstofffreiem Prozessfluidum beaufschlagt wird und dadurch keine innere Verschmutzung erfährt sowie keinen korrosiven Brenngasen ausgesetzt ist.

Um den Prozessfluidstrom in der Druckleitung 9 vorzuheizen, ist in einem die Brennraummantelwand 15 umgebenden Abgaskanal 17 ein Zusatzwärmetauscher 19 vorgesehen, der fluidseitig mit beiden Endanschlüssen z.B. in einer Bypassschaltung an die Druckleitung 9 angeschlossen ist. Zwischen die entsprechenden Anschlussstellen 26 und 27 ist dann ein Absperrschieber 28 geschaltet, so dass bei geschlossenem Absperrschieber 28 der Prozessfluidstrom durch diesen Zusatzwärmetauscher 19 strömt und durch die im Abgas noch enthaltene Wärmeenergie aufgeheizt wird. Im Abgaskanal 17, der über den Spalt zwischen der Brennraummantelwand 15 und dem Brennraumboden 13 mit dem Brennraum 12 verbunden ist, ist noch ein weiterer Zusatzwärmetauscher 18 angeordnet, der im Bedarfsfall jedenfalls einen vom Gebläse 24 geförderten Frischluftstrom vorheizt und vorzugsweise direkt in den Brennraum 12 oder in den Zuluftweg 23 einbläst.

Beide Zusatzwärmetauscher 18 , 19 können so aus dem Abgas Wärmeenergie zurückgewinnen, die direkt oder indirekt wieder dem Verbrennungsprozess zugeführt wird, so dass eine weitere Wirkungsgradverbeserung der Gesamtanlage erreicht werden kann. Die Zusatzwärmetauscher 18 und 19 können in die Brennraummantelwand 15 integriert sein.

Gemäss einer vorteilhaften Weiterbildung kannb bei sonst unverändertem Aufbau an die Druckleitung 9 zwischen dem Verdichter 1 und der Wärmequelle 3 noch ein Druckspeicher 30 angeschlossen werden, wobe ieine Speiseleitung 31 mit eingeschaltetem Absperrschieber 32 zum Druckspeicher 30 führt, während vom Druckspeicher 30 eine Entleerungsleitung 33 mit eingeschaltetem Absperrschieber 34 in die Druckleitung 9 mündet. Zwischen den Anschlussstellen 35 und 36 der beiden Leitungen 31 und 33 ist in die Druckleitung 9 ein weiterer Absperrschieber 37 eingeschaltet.Durch diese Ergänzung ergibt sich die Möglichkeit, auch unabhängig von einer Einspeisung des aus der Entspannungsmaschine 4 austretenden Prozessfluidstroms in die Wärmequelle 3 ganz allgemein bei einer Heissluftmaschine mit dem Verdichter 1 bei geschlossenen Absperrschiebern 34 und 37und geöffnetem Absperrschieber 32 den sehr grossvolumigen Druckspeicher 30 aufzuladen. Das Aufladen kann zu Zeiten billiger elektrischer Stromtarife mittels eines nur dem Verdichter zugeordneten Elektromotors erfolgen. Während hochtarifiger Spitzenlastzeiten kann dann bei stillstehendem Verdichter 1 sowie bei geschlossenen Absperschiebern 32 und 37 der gespeicherte Prozessfluidstrom aus dem Druckspeicher 30 entnommen werden. Die von der Entspannungsmaschine 3 erzeugte mechanische Energie kann dann insgesamt im Generator 6 in elektrische Energie umgewandelt oder zu anderen Arbeitsprozessen verwendet werden, ohne dassEnergie für der Verdichter 1 aufgewendet werden muss.

Daneben ist es vorteillhaft, dem Prozessfluidstrom, der aus der Entspannungsmaschine 4 austritt, Wärmeenergie für einen Wärmeverbraucher 38 zu entziehen. Hierzu kann in die Auslassleitung 25 ein Nachwärmetauscher eingebaut werden, über den Wärmeenergie einem Dainpferzeugungs-, einem ORC-, einem Kalinina-, einem Adsorptions-, einem Raumheizungs-, oder einem sonstigen Prozess mit Wärmebedarf zugeführt wird. Es kann jedoch auch eine unmittelbare Wärmeauskopplung erfolgen, indem z. B. ein Stirlingmotor direkt mit dem Prozessfluidstrom der Auslassleitung 25 beaufschlagt wird. Dabei ist diese Nutzungsmöglichkeit auch unabhängig von der vollen oder teilweisen Rückführung des Prozessfluidstromes zur Wärmequelle 3 gegeben.

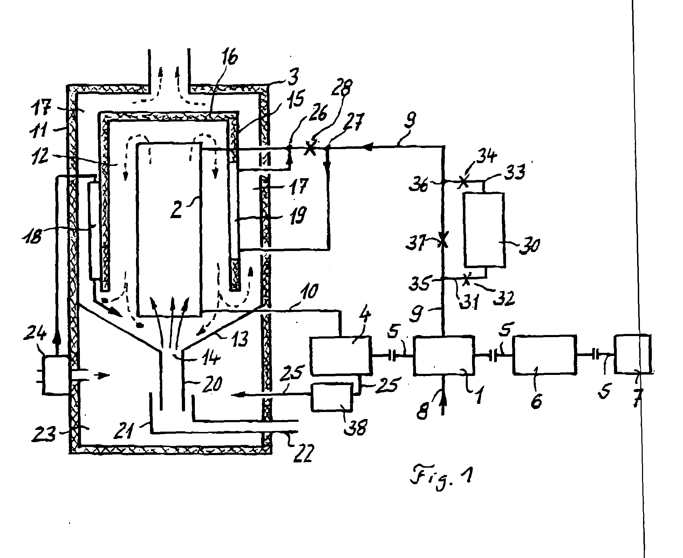

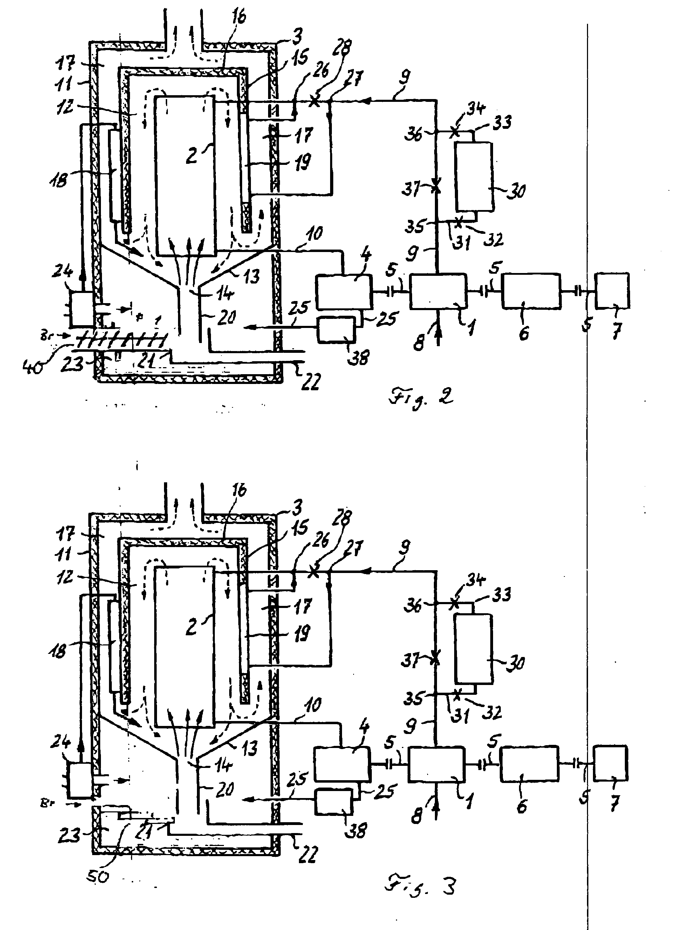

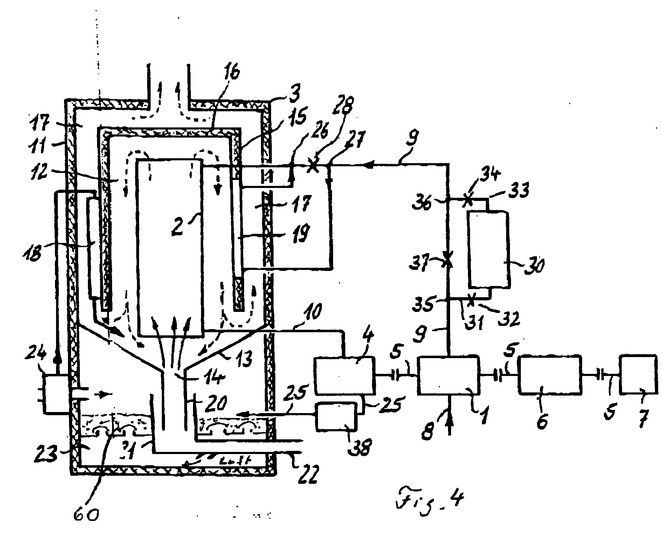

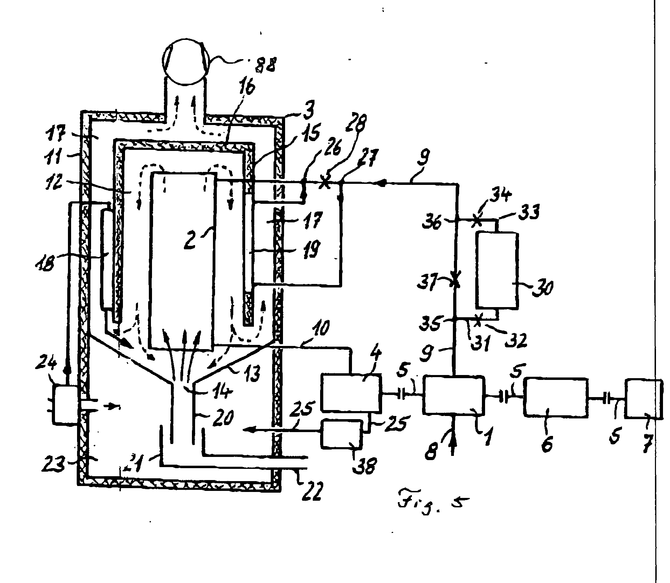

Brennstoff mit hoher Dichte bzw. grob- und großkörniger Brennstoff der schlecht fluidiserbar ist läßt sich mit einer der Wirbelkammer vorgeschalteten Unterschubfeuerung 40 (Fig 2), Rostfeuerung 50 (Fig. 3) oder Wirbelschichtfeuerung 60 (Fig 4) energetisch nutzen, wobei in der nachgeschalteten Wirbelkammerfeuerung der Fluidvolumenstrom begrenzt werden kann.

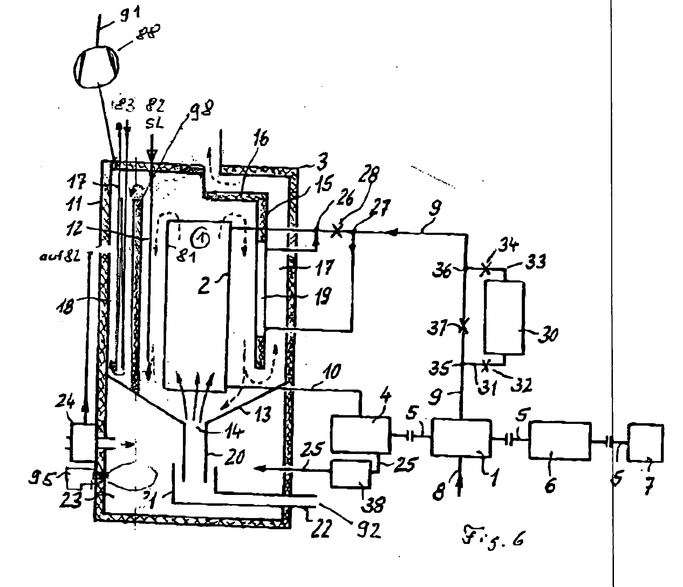

Neben dem Betrieb der Anlage im Überdruck ist es auch möglich zur Vermeidung von Rauchgasaustritten die Anlage mit einem Saugzug 88 (Fig. 5) im Unterdruck zu betreiben. Dieser Aspekt dient auch der Sicherheit.

Die Wirbelkammer, die mit Aufheizbrenner (Öl, Gas, Elekto etc.)95 aufgeheizt bzw. gestartet wird , kann mit oder ohne Sekundärluftvorwärmer 82 (Fig. 6) betrieben werden. Wird ein Wärmetauscher als Sekundärluftvorwärmer 82 genutzt, so dienen die verbleibenden Wärmetauscher 81 (bzw 2) und 83 zur Nutzung für den Stromerzeugungsprozess mittels Verdichter und Expansionsmaschine. Ohne Sekundärluftvorwärmung (SL) stehen die Wärmetauscher 83, 82 und 81 für den Stromerzeugungsprozess zur Verfürgung.

Zur Verbesserung der Emissionen und des Ausbrandes wird Abgas nach Saugzug 88 von der Stelle 91 zur Stelle 92 (22) geführt.

Die Feuerung insbesondere die Wirbelkammerfeuerung wird mit Öl, Gas, Elektro oder sonstiger Energie aufgeheizt bzw. gestartet

Die Anlage ist auch ohne Kraftkopplung d. h. ohne Eletktroerzeugung als reine Wärmeerzeugung erricht- und betreibbar.

## Patentansprüche

1. Verfahren zum Betreiben einer Heissluftmaschine, bei der in einer strömungstechnischen Reihenschaltung ein Prozessfluidstrom durch einen Verdichter, eine brennstoffbeheizte Wärmequelle mit einem Brennraum sowie eine Entspannungsmaschine geführt wird und Wärmeenergie, die in dem aus der Entspannungsmaschine ausströmenden Prozessfluidstrom enthalten ist, zumindest teilweise der Wärmequelle zugeführt wird, wobei der in den Verdichter einströmene Prozessfluidstrom Umgebungsluft ist,
**dadurch** gekennkzeichnet,
dass der aus dem Verdichter ausströmende Prozessfluidstrom durch einen thermisch mit der Wärmequelle gekoppelten Prozesswärmetauscher sowie durch die nachgeschaltete Entspannungsmaschine und daraus zumindest teilweise unmittelbar in den Zuluftweg des Brennraumes der Wärmequelle geführt wird.

2. Verfahren nach Anspruch 1,
**dadurch gekennzeichnet,**
**dass** der Prozessfluidstrom bei einer Luftüberschusszahl im Brennraum von Werten zwischen etwa 1 bis 2 allein die notwendige Verbrennungsluft liefert.

3. Verfahren nach Anspruch 1 oder 2,
**dadurch gekennzeichnet,**
**dass** bei einer Luftüberschusszahl im Brennraum unter dem Wert 1 zusätzlich zum Prozessfluidstrom Umgebungsluft zugeführt wird.

4. Verfahren nach Anspruch 1 2 oder 3,
**dadurch gekennzeichnet,**
**dass** ab einer Luftüberschusszahl im Brennraum von mehr als etwa 2 nur ein Teil des Prozessfluidstroms in den Zuluftweg eingeblasen wird.

5. Heissluftmachine zur Durchführung des Verfahrens nach einem der Ansprüche 1 - 4, wobei in einer strömungstechnischen Reihenschaltung ein Umgebungsluft fördernder Verdichter (1), eine Wärmequelle (3) mit einem Brennraum (12) für die Verfeuerung von Brennstoffen sowie eine Entspannungsmaschine (4) angeordnet sind und der aus der Entspannungsmaschine (4) austretende Prozessfluidstrom thermisch mit der Wärmequelle gekoppelt ist,
**dadurch** gekennkzeichnet,
dass in den Prozessfluidstrom zwischen dem Verdichter (1) und der Entspannungsmaschine (4) ein thermisch mit der Wärmequelle (3) gekoppelter Prozesswärmetauscher geschaltet ist und
dass der aus der Entspannungsmaschine (4) austretende Prozessfluidstrom unmittelbar in den Zuluftweg (23) der Wärmequelle (3) mündet.

6. Heissluftmachine nach Anspruch 5,
**dadurch gekennzeichnet,**
**dass** die Wärmequelle (3) einen aus der freien Atmosphäre gespeisten Zuluftweg (23) zum Brennraum (12) aufweist.

7. Heissluftmachine nach Anspruch 5 oder 6,
**dadurch** gekennkzeichnet,
dass die Wärmequelle (3) eine Brennstofffeuerung mit zumindest einem Prozesswärmetauscher (2) ist, wobei der Prozesswärmetauscher (2) ein Hochtemperaturwärmetauscher und im Brennraum (12) im unmittelbaren Flammbereich angeordnet ist und dass der Hochtemperaturwärmetauscher sekundärseitig in den Prozesskreislauf zwischen den Verdichter (1) und die Entspannungsmaschine (4) geschaltet ist.

8. Heissluftmachine nach Anspruch 7,
**dadurch** gekennkzeichnet,
dass im Abgasweg der Wärmequelle (3) wenigsten ein Zusatz-Wärmetauscher (18 ,19) angeordnet ist, der sekundärseitig wahlweise in den Prozessfluidstrom vor den Hochtemperaturwärmetauscher oder in den Zuluftweg des Brennraumes (12) schaltbar ist.

9. Heissluftmachine nach einem der Ansprüche 5-8,
**dadurch** gekennkzeichnet,
dass der Prozessfluidstrom Luft und die Entspannungsmaschine (4) ein Heissgasmotor ist.

10. Heissluftmachine nach einem der Ansprüche 5-9,
**dadurch** gekennkzeichnet,
dass der Prozesswärmetauscher (2) ein beidendig offenes Rohr bildet, das senkrecht in einem Brennraum (12) der Wärmequelle (3) steht und in das im Betrieb unmittelbar die Feuerungsflammfront gerichtet ist.

11. Heissluftmachine nach Anspruch 10,
**dadurch** gekennkzeichnet,
dass die axialen Enden des Prozesswärmetauschers (2) mit Abstand von benachbarten Wandungen (13, 16) des Brennraumes (12) stehen ,
dass unterhalb des unteren Endes des Prozesswärmetauschers (2) eine trichterförmige Brennraumbodenwand (13) mit einer axial mit dem Prozesswärmetauscher (2) fluchtenden Feuerungsöffnung (14) angeordnet ist,
dass der Prozesswärmetauscher (2) mit radialem Abstand von einer Brennraummantelwand (15) umgeben ist, die von einer Brennraumdeckenwand (16) ausgehend mit axialem Abstand oberhalb der Brennraumbodenwand (13) endet und dass radial außerhalb der Brennraummantelwand (15) ein Abgaskanal (17) ausgebildet ist.

12. Heissluftmachine nach Anspruch 11,
**dadurch** gekennkzeichnet,
dass in die Brennraummantelwand (15) wenigstens ein Zusatz-Wärmetauscher 19) integriert ist.

13. Heissluftmachine nach Anspruch 11 oder 12,
**dadurch** gekennkzeichnet,
dass im Abgaskanal (17) wenigstens ein Zusatz-Wärmetauscher (18) angeordnet ist.

14. Heissluftmachine nach einem der Ansprüche 11-13,
**dadurch** gekennkzeichnet,
dass wenigstens ein Zusatz-Wärmetauscher (19) in den Prozessfluidstrom strömungstechnisch vor den Prozesswärmetauscher (2) einschaltbar ist.

15. Heissluftmachine nach einem der Ansprüche 11-13,
**dadurch** gekennkzeichnet,
dass einer der Zusatz-Wärmetauscher (18) in einen Zuluftweg zum Brennraum (12) einschaltbar ist, wobei die Auslassleitung dieses Zusatzwärmetauschers (18) direkt in den Brennraum (12) mündet.

16. Heissluftmachine nach einem der Ansprüche 11 - 15,
**dadurch** gekennkzeichnet,
dass der Verdichter (1) und die Entspannungsmaschine (4) eine gemeinsame Antriebswelle (5) aufweisen und in einem gemeinsamen Gehäuse angeordnet sind.

17. Verfahren zum Betrieb einer Heissluftmaschine , wobei in einer strömungstechnischen Reihenschaltung ein Prozessfluidstrom wenigstens durch einen Verdichter, eine Wärmequelle sowie eine Entspannungsmaschine geführt wird, insbesondere nach einem der Ansprüche 1-4,
dass der Zustrom des vom Verdichter geförderten Prozessfluidsroms zur Entspannungsmaschine während wählbarer Zeiträume unterbrochen wird,
dass der Prozessfluidstrom während dieser Zeiträume in einen Druckspeicher gefördert wird und
dass der Prozessfluidstrom während einer Stillstandszeit des Verdichters aus dern Druckspeicher zur Entspannungsmaschine gefördert wird.

18. Heissluftmaschine zur Durchführung des Verfahrens nach Anspruch 17, wobei in einer stömungstechnischen Reihenschaltung ein Verdichter (1), eine Wärmequelle (3) und eine Entspannungsmaschine (4) vorgesehen sind, insbesondere nach einem der Anspüche 5 - 15,
**dadurch gekennzeichnet,**
**dass** an eine den Prozessfluidstrom führende Druckleitung (9) zwischen dem Verdichter (1) und der Wärmequelle (3) wahlweise ein Druckspeicher (30) strömungstechnisch anschliessbar ist,
**dass** bei laufendem Verdichter (1) und stillstehender Entspannungsmachine (4) der Druckspeicher (30) an die Druckleitung (9) angeschlossen ist und
**dass** bei aufgeladenem Druckspeicher (30) sowie stillstehendem Verdichter (1) der Prozessfluidstrom aus dem Druckspeicher (30) zur Wärmequelle (3) und der Entspannungsmaschine (4) strömt.

19. Verfahren zum Betrieb einer Heissluftmaschine , wobei in einer strömungstechnischen Reihenschaltung ein Prozessfluidstrom wenigstens durch einen Verdichter, eine Wärmequelle sowie eine Entspannungsmaschine geführt wird, insbesondere nach einem der Ansprüche 1-4 oder 17,
**dadurch gekennzeichnet,**
**dass** dem aus der Entspannungsmaschine ausströmenden Prozessfluidstrom Wärmeenergie entzogen wird.

20. Heissluftmaschine zur Durchführung des Verfahrens nach Anspruch 19, wobei in einer strömungstechnischen Reihenschaltung wenigstens ein Verdichter(1), eine Wärmequelle(3) und eine Entspannungsmaschine(4) vorgesehen sind, insbesondere nach einem der Ansprüche 5 - 15 oder 18,
**dadurch gekennzeichnet,**
**dass** in die Auslassleitung (25) der Entspannungsmaschine (4) stömungtchnisch ein Wärmeenergieverbraucher (38) eingeschaltet ist.

21. Heissluftmaschine zur Durchführung des Verfahrens nach Anspruch 20, wobei in einer strömungstechnischen Reihenschaltung wenigstens ein Verdichter(1), eine Wärmequelle(3) und eine Entspannungsmaschine(4) vorgesehen sind,
**dadurch gekennzeichnet,**
**dass** eine Unterschubfeuerung (40) Fig 2 der Wirbelkammer (2, (3), 11 bis 24) vorgeschaltet ist.

22. Heissluftmaschine zur Durchführung des Verfahrens nach Anspruch 20, wobei in einer strömungstechnischen Reihenschaltung wenigstens ein Verdichter(1), eine Wärmequelle(3) und eine Entspannungsmaschine(4) vorgesehen sind,
**dadurch gekennzeichnet,**
**dass** eine Rostfeuerung (50) Fig 3 der Wirbelkammer (2, (3), 11 bis 24) vorgeschaltet ist.

23. Heissluftmaschine zur Durchführung des Verfahrens nach Anspruch 20, wobei in einer strömungstechnischen Reihenschaltung wenigstens ein Verdichter(1), eine Wärmequelle (3) und eine Entspannungsmaschine (4) vorgesehen sind,
**dadurch gekennzeichnet,**
**dass** eine Wirbelschichtfeuerung (60) Fig 4 der Wirbelkammer (2, (3), 11 bis 24) vorgeschaltet ist.

24. Heissluftmaschine zur Durchführung des Verfahrens nach Anspruch 20,21,22 oder 23 wobei in einer strömungstechnischen Reihenschaltung wenigstens ein Verdichter(1), eine Wärmequelle (3) und eine Entspannungsmaschine (4) vorgesehen sind,
**dadurch gekennzeichnet,**
**dass** eine Saugzug (88) Fig 5 der Wirbelkammer (2, (3), 11 bis 24) nachgeschaltet ist.

25. Heissluftmaschine zur Durchführung des Verfahrens nach Anspruch 24, wobei in einer strömungstechnischen Reihenschaltung wenigstens ein Verdichter(1), eine Wärmequelle (3) und eine Entspannungsmaschine (4) vorgesehen sind,
**dadurch gekennzeichnet,**
**dass** die Wirbelkammer (2, (3), 11 bis 24) mit einem Aufheizbrenner(95), der mit Öl, Gas, Elekto oder sonstiger Energie betrieben wird, aufgeheizt bzw. gestartet wird.

26. Heissluftmaschine zur Durchführung des Verfahrens nach Anspruch 25, wobei in einer strömungstechnischen Reihenschaltung wenigstens ein Verdichter(1), eine Wärmequelle (3) und eine Entspannungsmaschine (4) vorgesehen sind,
**dadurch gekennzeichnet,**
**dass** die Wirbelkammer (2, (3), 11 bis 24) neben den Hochtemperaturwärmetauscher (81bzw. 2) einen Sekundärluftwärmetauscher (82) und äußeren Zusatzwärmetauscher (83) aufweist.

27. Heissluftmaschine zur Durchführung des Verfahrens nach Anspruch 25, wobei in einer strömungstechnischen Reihenschaltung wenigstens ein Verdichter(1), eine Wärmequelle (3) und eine Entspannungsmaschine (4) vorgesehen sind,
**dadurch gekennzeichnet,**
**dass** die Wirbelkammer (2, (3), 11 bis 24) neben den Hochtemperaturwärmetauscher (81 bzw. 2) einen inneren Zusatzwärmetauscher(82) (ohne Sekundärluftwärmenutzung) und äußeren Zusatzwärmetauscher(83) autweist. Alle drei Wärmetauscher (83), (82) und (81) dienen primär der Erzeugung elektrischer Energie.

28. Heissluftmaschine zur Durchführung des Verfahrens nach Anspruch 26 oder 27, wobei in einer strömungstechnischen Reihenschaltung wenigstens ein Verdichter(1), eine Wärmequelle (3) und eine Entspannungsmaschine (4) vorgesehen sind,
**dadurch gekennzeichnet,**
**dass** nach Wirbelkammer (3) und Saugzug (88) von der Stelle 91 zur Stelle 92 Rauchgas vor Wirbelkammer zurückgeführt wird

29. Heissluftmaschine zur Durchführung des Verfahrens nach Anspruch 28, wobei in einer strömungstechnischen Reihenschaltung wenigstens ein Verdichter(1), eine Wärmequelle (3) und eine Entspannungsmaschine (4) vorgesehen sind,
**dadurch gekennzeichnet,**
**dass** zwischen Wärmeteauscher (82) und Wärmetauscher (83) eine Isolierung (98) eingebaut ist.

30. Heissluftmaschine zur Durchführung des Verfahrens nach Anspruch 29, wobei in einer strömungstechnischen Reihenschaltung wenigstens ein Verdichter(1), eine Wärmequelle (3) und eine Entspannungsmaschine (4) vorgesehen sind,
**dadurch gekennzeichnet,**
**dass** zwischen Wärmeteauscher (82) und Isolierung (98) der Nachreaktionsraum (2.Stufe zur Nachverbrennung) plaziert ist.

31. Heissluftmaschine zur Durchführung des Verfahrens nach Anspruch 30, wobei in einer strömungstechnischen Reihenschaltung wenigstens ein Verdichter(1), eine Wärmequelle (3) und eine Entspannungsmaschine (4) vorgesehen sind,
insbesondere nach einem der Ansprüche 1 bis 28
**dadurch gekennzeichnet,**
**dass** die Anlage auch ohne Verdichter (1), Druckspeicher (30) und Expansionsmaschine (4) als reine Wärmeereugungseinrichtung erricht- und betreibbar ist.
